(19) **Europäisches Patentamt / European Patent Office / Office européen des brevets**

(11) **EP 4 753 320 A1**

(12) **EUROPEAN PATENT APPLICATION**
published in accordance with Art. 153(4) EPC

(43) Date of publication:
**03.06.2026 Bulletin 2026/23**

(21) Application number: **23946139.5**

(22) Date of filing: **24.07.2023**

(51) International Patent Classification (IPC):
**H04W 24/06** $^{(2009.01)}$

(52) Cooperative Patent Classification (CPC):
**H04W 24/06**

(86) International application number:
**PCT/CN2023/108970**

(87) International publication number:
**WO 2025/020045 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **TIAN, Wenqiang**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(54) **DATA TRANSMISSION METHOD AND COMMUNICATION DEVICE**

(57) The present application relates to a data transmission method and a communication device. The method comprises: a first communication device sends processing data, the processing data being obtained by processing a plurality of pieces of information to be processed. According to embodiments of the present application, the plurality of pieces of information to be processed are processed, and then the processing data is transmitted, so that the amount of data needing to be transmitted can be reduced, thereby reducing the signaling overhead of a system.

300 — S310

A first communication device transmits processed data, wherein the processed data is acquired by processing a plurality of pieces of information to be processed.

FIG. 3

## Description

## TECHNICAL FIELD

The present disclosure relates to the technical field of communications, and in particular, relates to a method for transmitting data, and a communication device thereof.

## RELATED ART

Solutions based on Artificial Intelligence (AI) are more and more widely used in wireless communication systems. For example, channel state information (CSI) feedback and CSI prediction are implemented by the AI. Information such as performance evaluation results of the AI solutions may incur a large amount of data transmission and signaling overhead.

## SUMMARY

Embodiments of the present disclosure provide a method for transmitting data, and a communication device thereof, which may reduce an amount of data to be transmitted.

Some embodiments of the present disclosure provide a method for transmitting data. The method is performed by a first communication device, and includes: transmitting processed data, wherein the processed data is acquired by processing a plurality of pieces of information to be processed.

Some embodiments of the present disclosure provide a method for transmitting data. The method is performed by a second communication device, and includes: receiving processed data, wherein the processed data is acquired by processing, by a first communication device, a plurality of pieces of information to be processed.

Some embodiments of the present disclosure provide a first communication device for transmitting data. The first communication device includes: a transmitting unit, configured to transmit processed data, wherein the processed data is acquired by processing a plurality of pieces of information to be processed.

Some embodiments of the present disclosure provide a second communication device for transmitting data. The second communication device includes: a receiving unit, configured to receive processed data, wherein the processed data is acquired by processing, by a first communication device, a plurality of pieces of information to be processed.

Some embodiments of the present disclosure provide a communication device. The communication device includes: a processor and a memory storing one or more computer programs; wherein the processor is configured to call and run the one or more computer programs stored in the memory, cause the communication device to perform the method for transmitting data as described above.

Some embodiments of the present disclosure provide a chip. The chip includes: a processor configured to call and run one or more computer programs from a memory to cause a terminal equipped with the chip to perform the method for transmitting data as described above.

Some embodiments of the present disclosure provide a computer-readable storage medium. The computer-readable storage medium stores one or more computer programs, wherein the one or more computer programs, when loaded and run by a terminal, cause the terminal to perform the method for transmitting data as described above.

Some embodiments of the present disclosure provide a computer program product. The computer program product includes: one or more computer instructions, wherein the one or more computer instructions, when loaded and executed by a computer, cause the computer to perform the method for transmitting data as described above.

Some embodiments of the present disclosure provide a computer program that causes a computer to perform the method for transmitting data according to the above embodiments.

According to the embodiments of the present disclosure, a plurality of pieces of information to be processed are processed and processed data is transmitted. In this way, the amount of data to be transmitted is reduced, and the signaling overhead of the system is further reduced.

## BRIEF DESCRIPTION OF DRAWINGS

FIG. 1 is a schematic diagram of an application scenario according to some embodiments of the present disclosure;

FIG. 2A is a schematic flowchart of a CSI feedback process;

FIG. 2B is a schematic flowchart of a CSI prediction process;

FIG. 3 is a schematic flowchart of a method for transmitting data according to some embodiments of the present disclosure;

FIG. 4 is a schematic flowchart of a method for transmitting data according to some embodiments of the present disclosure;

FIG. 5A is a schematic diagram of transmitting first data from a UE to a network;

FIG. 5B to FIG. 5E are schematic diagrams of an example where a UE transmits first data to a network;

FIG. 6A is a schematic diagram of a network transmits second data to a UE;

FIG. 6B to FIG. 6E are schematic diagrams of an example where a network transmits second data to a UE;

FIG. 7 is a schematic block diagram of a first communication device according to some embodiments of the present disclosure;

FIG. 8 is a schematic block diagram of a second communication device according to some embodiments of the present disclosure;

FIG. 9 is a schematic block diagram of a communication device according to some embodiments of the present disclosure;

FIG. 10 is a schematic block diagram of a chip according to some embodiments of the present disclosure; and

FIG. 11 is a schematic block diagram of a communication system according to some embodiments of the present disclosure.

## DETAILED DESCRIPTION

The technical solutions according to the embodiments of the present disclosure are described hereinafter in combination with the accompanying drawings for the embodiments of the present disclosure.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi) network, a 5$^{th}$ generation (5G) communication system, or other communication systems.

In general, the traditional communication systems support a limited number of connections and are relatively easy to implement. However, with the development of the communication technologies, the mobile communication systems not only support traditional communications, but also support, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, or a standalone (SA) scenario.

In some embodiments, the communication systems according to the embodiments of the present disclosure are also applicable to an unlicensed spectrum. The unlicensed spectrum may also be considered as a shared spectrum. Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (STA) in the WLAN, for example, a cellular phone, a cordless phone, a Session Initiation Protocol (SIP) phone, a wireless local loop (WLL) STA, a personal digital assistant (PDA), a handheld device with a wireless communication capability, a computing device or other processing devices connected to a wireless modem, an in-vehicle device, a wearable device, a terminal device in a next generation communication system (e.g., the NR network), a terminal device in an evolved public land mobile network (PLMN) network or the like.

In the embodiments of the present disclosure, the terminal device is deployed on land (e.g., indoors or outdoors, or handheld, wearable, or vehicle-mounted deployment); or the terminal device may be deployed on water (for example, on a ship); or the terminal device may be deployed in the air (e.g., on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example but not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

In the embodiments of the present disclosure, the network device is a device used to communicate with a mobile device. The network device is an access point (AP) in the WLAN, a base transceiver station (BTS) in the GSM or the CDMA, a NodeB (NB) in the WCSMA, or an evolutional NodeB (eNB or eNodeB) in the LTE, a relay station or the AP, an in-vehicle device, a wearable device, a network device (gNB) in the NR network, a network device in the PLMN network, a network device in the NET network, and the like.

By way of example but not limitation, in the embodiments of the present disclosure, the network device may have mobility. For example, the network device may be a mobile device. Optionally, the network device may be a satellite or a balloon station. The satellite may be a low-Earth orbit (LEO) satellite, a medium-Earth orbit (MEO) satellite, a geostationary-Earth orbit (GEO) satellite, a high-elliptical orbit (HEO) satellite, and the like. Optionally, the network device is also a base station set up on land, water, and the like.

In the embodiments of the present disclosure, the network device provides services for a cell. The terminal device communicates with the network device over a transmission resource (for example, a frequency-domain resource or a spectrum resource) used by the cell. The cell may be a cell corresponding to the network device (for example, a base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission service.

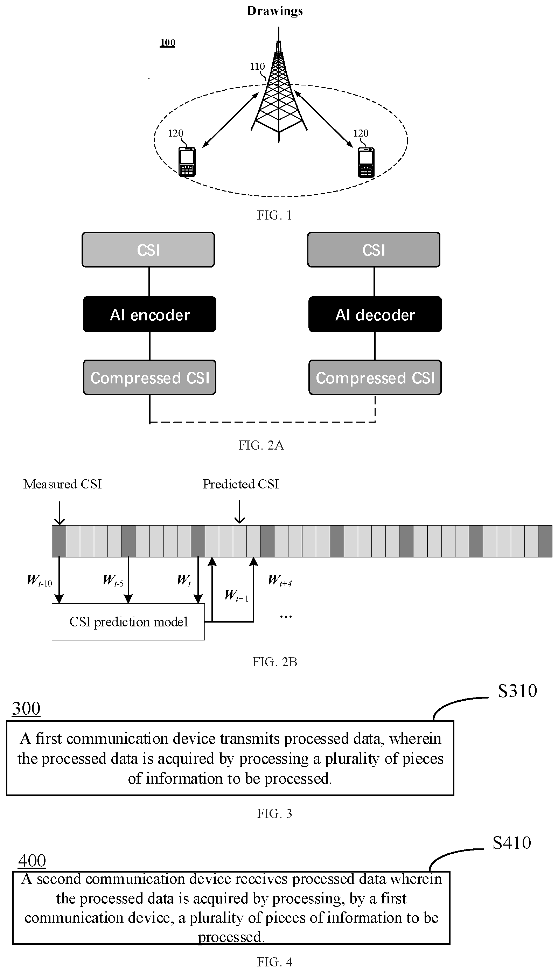

FIG. 1 exemplarily illustrates a communication system 100. The communication system includes a network device 110 and two terminal devices 120. In some embodiments, the communication system 100 includes a plurality of network devices 110, and another number of the terminal devices 120 may be included in the coverage area of each of the network devices 110, which is not limited in the embodiment of the present disclosure.

In some embodiments, the communication system 100 further includes a mobility management entity (MME), an access and mobility management function (AMF), and other network entities, which is not limited in the embodiment of the present disclosure.

The network device also includes an access network device and a core network device. In other words, the wireless communication system also includes multiple core networks used for communication with the access network device. The access network device is an LTE system, a next radio (NR) (mobile communication) system or an eNB (also referred to as "an e-NodeB") macro base station in an authorized auxiliary access long-term evolution (LAA-LTE) system, a micro base station (also referred to as "a small base station"), a pico base station, an AP, a transmission point (TP) or a new generation NodeB (gNodeB), and the like.

It should be understood that a device with communication function in a network or a system in the embodiments of the present disclosure is referred to as a communication device. Taking the communication system illustrated in FIG. 1 as an example, the communication device includes a network device with the communication function and a terminal device with the communication function. The network device and the terminal device may be specific devices in the embodiments of the present disclosure, and are not repeatedly described herein. The communication device also includes other devices in the communication system, such as a network controller, a mobility management entity, and other network entities, which is not limited in the embodiments of the present disclosure.

It should be understood that the terms "system" and "network" are used interchangeably herein. The term "and/or" only means an association relationship used to describe an associated object. The term "and/or" indicates any of three types of relationships. For example, the phrase "A and/or B" may mean (A), (B), or (A and B). In addition, the symbol "/" generally indicates an "or" relationship between contextual objects.

It should be understood that the term "indication" mentioned in the embodiments of this application may refer to direct indication, indirect indication, or an expression of a relationship. Illustratively, when A indicates B, it may mean A directly indicates B (e.g., B being acquired via A), or A indirectly indicates B (e.g., A indicating C via which B is acquired), or it may indicate an inherent relationship between A and B.

In the description of the embodiments of this disclosure, the term "correspondence" may indicate a direct or indirect relationship between the two, may also denote an associative relationship, or may refer to relationships such as indication and being indicated, configuration and being configured.

For the convenience of understanding of the technical solutions according to the embodiments of the present disclosure, some relevant technologies of the embodiments of the present application are described as follows. The relevant technologies, as optional solutions, may be randomly combined with the technical solutions according to the embodiments of the present disclosure, and these combinations all fall within the protection scope of the embodiments of the present disclosure.

FIG. 2A illustrates CIS feedback, and CSI compression and feedback based on AI are implemented by an AI encoder and an AI decoder. FIG. 2B illustrates CSI prediction, and a predicted CSI may be acquired by inputting measured CSI is input into a CSI prediction model. The subscript of W represents a time instant. For example, $W_{t-10}$ represents the CSI at time instant (t-10).

For schemes based on AI/machine learning (ML), the performance of the schemes may be affected by scenarios, data and application conditions. The impact is subject to issues such as fluctuations, disturbances, irregular variations. For example, AI/ML-based scheme may include AI/ML-based CSI compression and recovery, AI/ML-based prediction, or other schemes based on AI/ML. In a system under practical use, in a case where an AI/ML scheme is judged as having failed merely due to a transient performance degradation, problems like unnecessary failure determinations and unwarranted scheme switching may be caused; furthermore, additional processes and signaling overhead from unnecessary model/scheme updates and reconfigurations may be caused. For instance, in a case where a CSI compression and recovery scheme returns to normal operation after a brief period of ineffectiveness, it is not necessary to judge the scheme as failed and subsequently trigger an alternative scheme; nor is it necessary to first make a failure determination, trigger an alternative scheme, and then switch back to the original scheme. The current basic solution is to perform performance evaluation of the AI/ML scheme, for example, by conducting multiple evaluations (including multiple transmissions of evaluation data and multiple performance assessments) to obtain a relatively stable evaluation result.

Although multiple performance evaluations may yield a relatively stable assessment result for an AI/ML scheme, this approach may, however, lead to a large amount of evaluation-related data transmission and signaling overhead. For example, in a CSI compression/recovery or a CSI prediction scheme, in a case where the difference between the original CSI and the CSI upon compression and recovery is used as the evaluation metric, then performing multiple evaluations may require the UE to transmit the original CSI to the network multiple times, or the network to transmit the recovered CSI to the UE multiple times. The total over-the-air overhead, resulting from the combination of frequent transmissions and the volume of information in each transmission, may constitute a very large evaluation overhead.

FIG. 3 is a schematic flowchart of a method for transmitting data according to some embodiments of the present disclosure. The method is optionally applied to the system illustrated in FIG.1, but the method is not limited thereto. The method includes the following process.

In S310, a first communication device transmits processed data, wherein the processed data is acquired by processing a plurality of pieces of information to be processed.

In some embodiments, the first communication device transmits processed data to a second communication device. For example, the first communication device is a terminal device, and the second communication device is a network device; or the first communication device is a network device, and the second communication device is a terminal device; or the first communication device is a first terminal device, and the second communication device is a second terminal device. The plurality of pieces of information to be processed include a plurality of pieces of information that need to be transmitted from the first communication device to the second communication device. The first communication device processes the plurality of pieces of information to be processed to acquire processed data, and then transmits the processed data to the second communication device. In this way, the amount of data to be transmitted is reduced, and the signaling overhead is reduced.

In some embodiments, the plurality of pieces of information to be processed include: data associated with model performance monitoring, training, and testing or usage within the first communication device. In the embodiments of the present disclosure, the first communication device and/or the second communication device may have a model applicable to communication scenarios, for example, a model associated with the CSI. The plurality of pieces of information to be processed may be various types of data for model performance monitoring, training, and testing or usage, such as input data, output data, tag data and evaluation data, and the like.

In some embodiments, each of the plurality of pieces of information to be processed includes at least one of: a channel, a feature vector representing the CSI, input information of a model and output information of a model.

In the embodiments of this present disclosure, the plurality of pieces of information to be processed include a plurality of channels. For example, a UE acquires a channel H1 via channel estimation. For another example, a network acquires a channel H2 via a channel recovery scheme or prediction scheme. The plurality of pieces of information to be processed may include a plurality of feature vectors representing the CSI. For example, the UE acquires the feature vector representing the CSI by performing singular value decomposition (SVD) on the channel H1. For another example, the network acquires the feature vector representing the CSI via the channel recovery scheme or prediction scheme.

In some embodiments, the channel includes at least one of: an initial channel formed by time-domain information, frequency-domain information, angle-domain information, and antenna-domain information; a channel acquired by extracting information in a time domain from the initial channel and selecting a subset of time-domain information; a channel acquired by extracting information in a frequency domain from the initial channel and selecting a subset of frequency-domain information; a channel acquired by extracting information in an angle domain from the initial channel and selecting a subset of angle-domain information; a channel acquired by extracting information in an antenna domain from the initial channel and selecting a subset of antenna-domain information; or a channel acquired by quantizing the initial channel, i.e., a channel acquired by performing K-bit quantization on the channel H1 by the terminal device, or a channel acquired by performing K-bit quantization on the channel H1 by the network device.

For example, the channel formed by the time-domain information may include a channel having a plurality of symbols and a plurality of slots in the time domain. The channel formed by the frequency-domain information may include a channel having a plurality of subcarriers and a plurality of resource blocks (RBs) in the frequency domain. The channel formed by the angle-domain information may include a channel having a plurality of transmission angles and a plurality of reception angles in the angle domain. The channel formed by the antenna-domain information may include a channel having a plurality of transmit antennas and a plurality of transmit ports in the antenna domain.

In some embodiments, the feature vector representing the CSI includes at least one of: a feature vector representing the CSI acquired by performing SVD on the channel; a feature vector representing the CSI acquired by the CSI recovery scheme; or a feature vector representing the CSI acquired by the CSI prediction scheme.

For example, the first communication device is a terminal device, and the terminal device performs SVD on the channel H1 to acquire the feature vector representing the CSI. For example, the first communication device is a network device. In a process of AL/ML-based CSI compression and recovery, the network device acquires the feature vector representing the CSI based on a CSI recovery scheme. In a process of AL/ML-based CSI prediction, the network device acquires the feature vector representing the CSI based on a CSI prediction scheme.

In some embodiments, the input information of the model includes the channel and/or the feature vector representing the CSI. For example, the input information of the model may also be referred to as tag data, input data, initial data, expected data, or the like.

In some embodiments, the output information of the model includes the channel and/or the feature vector representing the CSI. For example, the output information of the model may also be referred to as evaluation data, output data, prediction data, or the like.

In some embodiments, processing the plurality of pieces of information to be processed includes: acquiring a mean value of the plurality of pieces of information to be processed; and acquiring a mean value of the plurality of pieces of information to be processed upon element-wise processing.

In some embodiments, the element-wise processing of the plurality of pieces of information to be processed includes at least one of: taking absolute values of elements in the plurality of pieces of information to be processed; taking modulus values of elements in the plurality of pieces of information to be processed; taking squares of absolute values of elements in the plurality of pieces of information to be processed; taking squares of modulus values of elements in the plurality of pieces of information to be processed; or multiplying elements in the plurality of pieces of information to be processed by conjugates of the elements.

In the embodiments of the present disclosure, a mean value of elements of the plurality of pieces of information to be processed may be acquired, or a mean value may be acquired upon taking absolute values, modules values, square operations, conjugate operations of elements of the plurality of pieces of information to be processed. The element-wise processing is only an example instead of limitation, and other processing may be performed on elements according to actual conditions. In the embodiments of the present disclosure, taking the mean value of the plurality of pieces of information to be processed is conducive to reducing the amount of data. By taking the mean value of the plurality of pieces of information to be processed upon the element-wise processing, and taking the absolute values, modules values, square operations, conjugate operations, a cumulative effect of errors may be better reflected. For example, the raw data may have both positive and negative values. By first taking the absolute values and then calculating the mean value, the positive and negative errors may not cancel each other out, but instead accumulate.

For example, a piece of information D1 to be processed includes elements {d11, d12, d13, d14}. By taking absolute values of the piece of information to be processed, the absolute values of the elements in D1 as a set {|d11|, |d12|, |d13|, |d14|} are acquired. By taking absolute values of the piece of information to be processed and then taking squares, the squares of the absolute values of elements in D1 including {|d11|$^2$, |d12|$^2$, |d13|$^2$, |d14|$^2$} are acquired. By taking modulus values of the piece of information to be processed, the modulus values of the elements in D1 as a set {‖d11‖, ‖d12‖, ‖d13‖, ‖d14‖} are acquired. By taking modulus values of the piece of information to be processed and then taking squares, the modulus values of the elements in D1 as a set {‖d11‖$^2$, ‖d12‖$^2$, ‖d13‖$^2$, ‖d14‖$^2$} are acquired. The elements in the plurality of pieces of information to be processed are multiplied by conjugates of the elements, a set [|d11. * d11'| ,|d12. * d12'|, |d13. * d13'|, |d14. * d14'|] is acquired. "d11. * d1‴" represents a conjugate point multiplication of d11 by a conjugate point d11' of d11.

In some embodiments, acquiring the mean values includes at least one of: taking a mean value of the information based on a number of samples; taking a mean value of internal elements in the information; or taking a mean value of internal elements in the information and then taking a mean value of a number of samples.

In some embodiments, taking the mean value of the internal elements of the information includes: taking a mean value of a total number of the internal elements of the information; and taking a mean value of a number of elements in a dimension of the internal elements of the information.

In the embodiments of the present disclosure, the mean value of the plurality of pieces of information to be processed is acquired by taking the mean value based on a number of samples, a number of internal elements, or a number of dimensions. For example, the number of dimensions includes a number of sub-bands, a number of transmit ports, virtual and real dimensions of complex numbers, and the like.

For example, N is a number of samples, and N pieces of information to be processed are taken a mean value based on the number of samples N to acquire a piece of processed information. For example, the plurality of pieces of information to be processed include D1, D2, and D3. Elements in D1 include {d11, d12, d13, d14}. Elements in D2 include {d21, d22, d23, d24}; Elements in D3 include {d31, d32, d33, d34}. In a case where the elements in D1, the elements in D2, and the elements in D3 are averaged element-wise based on N = 3, a set {D11, D12, D13, D14} is acquired. D11 = (d11 + d21 + d31)/3, D12 = (d12 + d22 + d32)/3, D13 = (d13 + d23 + d33)/3, and D14 = (d14 + d24 + d34)/3.

For example, in a case where the absolute values of the elements in D1, D2, and D3 are taken first, then the mean values are taken for the absolute values of the elements in D1, D2 and D3 based on the number of samples N = 3, a set {D21, D22, D23, D23} is acquired. D21 = (|d11| + |d21| + |d31|)/3, D22 = (|d12| + |d22| + |d32|)/3, D23 = (|d13| + |d23| + |d33|)/3, D24 = (|d14|+ |d24| + |d34|)/3.

For example, M is a number of elements in a piece of information to be processed, the mean value is taken for the M elements in each of the N pieces of information to be processed based on the number of elements M, and thus N pieces of processed information are acquired. In a case where the mean values are taken for the elements in D1, D2, and D3 based on M = 4, a set {D31, D32, D33} is acquired. D31 = (d11 + d12 + d13 + d14)/4, D32 = (d21 + d22 + d23 + d24)/4, D33 = (d31 + d32 + d33 + d34)/4.

For example, M = d1 * d2, d1 and d2 are numbers of dimensions. A modulus operation is performed on the elements in each of the N pieces of information to be processed, and then a mean value is taken for the number of dimensions d1 or d2 based on the number of dimensions, and thus the N pieces of processed information are acquired. In a case where a modulus operation is performed on the elements in D1, D2, and D3, the mean values are taken based on d2 = 4, a set {D41, D42, D43} is acquired. D41 = (‖d11‖ + ‖d12‖ + ‖d13‖ + ‖d14‖)/4, D42 = (‖d21‖ + ‖d22‖ + ‖d23‖ + ‖d24‖)/4, and D43 = (‖d31‖ + ‖d32‖ + ‖d33‖ + ‖d34‖)/4.

Further, the N pieces of processed information are further acquired based on the mean value of N, and thus a piece of processed information is acquired.

In some embodiments, the first communication device is a terminal device; the plurality of pieces of information to be processed include a plurality of pieces of first information to be processed in the terminal device; and the processed data includes first data acquired by processing the plurality of pieces of first information in a first processing mode. In the embodiments of the present disclosure, the first information includes at least one of: a first channel, first feature vector representing CSI, or input information of the model. For details about how the terminal device processes the first channel, the first feature vector representing the CSI and the input information of the model, reference may be made to the above description and examples. For example, the terminal device transmits the first data to the network device and other terminal devices.

In some embodiments, the first information includes at least one of: tag data, assistance data, or input data of the model in the terminal device. In the embodiments of the present disclosure, at least one of the tag data, the assistance data, or the input data may be input to the model for processing.

In some embodiments, the model in the terminal device is an encoder of a CSI generation model. For example, at least one of the tag data, the assistance data, or the input data of the CSI generation model includes CSI to be processed. The CSI to be processed is input to an AI encoder of the CSI generation model as illustrated in FIG. 2A. The CSI generation model is used for CSI feedback, CSI prediction, or the like scenarios. Compressed CSI is acquired upon decoding by the AI encoder. The terminal device transmits the compressed CSI to the network device or other terminal devices for decoding. The terminal device also processes the plurality of pieces of CSI to be processed, i.e., the plurality of pieces of first information. Then the terminal device transmits the processed CSI to the network device or other terminal devices, so as to assist the network device or other terminal devices in performing model performance evaluation.

In some embodiments, the first data is transmitted over at least one of:
a radio resource control (RRC) message; uplink control information (UCI); an uplink message in a random access procedure; a physical uplink control channel (PUCCH); a physical uplink shared channel (PUSCH); dedicated uplink channels for AI and/or ML; a terminal device capability report message; sidelink control information (SCI); a physical sidelink control channel (PSCCH); or a physical sidelink shared channel (PSSCH).

For example, the terminal device reports the first data to the network device over the RRC message, the UCI, the PUCCH, the PUSCH, the uplink message in the random access procedure, the dedicated uplink channel for AI, the dedicated uplink channel for ML or the terminal device capability report message. For example, the first terminal device transmits the first data to the second terminal device over the SCI, the PSCCH, or the PSSCH. In a case where a large amount of data is to be transmitted, the first data is transmitted over the RRC message, the PUSCH, the PSSCH, or the like. In a case where high timeliness is required, the first data is transmitted over the UCI, the PUCCH, the uplink message in the random access procedure, the dedicated uplink channel for AI, the dedicated uplink channel for ML, the terminal device capability report message, the SCI, the PSCCH, or the like.

In some embodiments, the first communication device is a network device; the plurality of pieces of information to be processed include a plurality of pieces of second information to be processed in the network device; and the processed data includes second data acquired by processing the plurality of pieces of second information in a second processing mode. In the embodiments of the present disclosure, the second information includes at least one of: a second channel, a second feature vector representing CSI, or output information of the model. For details about how the terminal device processes the second channel, the second feature vector representing CSI, and the output information of the model, reference may be made to the above description and examples. For example, the network device transmits the first data to the terminal device.

In some embodiments, the second information includes at least one of: evaluation data, assistance data, or output data of the model in the network device. In the embodiments of the present disclosure, the model in the network device may be the same as, relevant to, or different from the model in the terminal device. The model in the network device may output at least one of the evaluation data, the assistance data, or the output data.

In some embodiments, the model in the network device is a decoder of a CSI recovery model and/or a CSI prediction model. In the embodiments of the present disclosure, the model in the network device may be the same as, related to, or different from the model in the terminal device. For example, a first model in the terminal device includes the encoder of the CSI generation model, and a second model in the network device includes the decoder of the CSI reconstruction model and/or the CSI prediction model. For example, as illustrated in FIG. 2A, in a case where the terminal device transmits the compressed CSI acquired by the AI encoder to the network device, the network device performs decoding by inputting the compressed CSI to the decoder of the CSI recovery model and/or the CSI prediction model to acquire decoded CSI. The network device compares the decoded CSI with a plurality of received CSI to be processed, and thus acquires a performance evaluation result.

In the embodiments of the present disclosure, the network device also processes a plurality of decoded CSI or a plurality of performance evaluation results, and then the network device transmits the processed decoded CSI and performance evaluation results to the terminal device, so as to assist the terminal device in performing model performance evaluation.

In some embodiments, the second data is transmitted over at least one of: a broadcast message; an RRC message; a medium access control (MAC) control element (CE); downlink control information (DCI); a downlink message in a random access procedure; a physical downlink control channel (PDCCH); a physical downlink shared channel (PDSCH); dedicated downlink channels for AI and/or ML; a network capability indication; SCI; a PSCCH; or a PSSCH.

For example, upon acquisition of the second data by processing the plurality of the second information, the network device transmits the second data over the broadcast message, the RRC message, the MAC CE, the DCI, the downlink message in the random access procedure, the PDCCH, the PDSCH, the dedicated downlink channel for AL, the dedicated downlink channel for the ML, or the network capability indication. For example, the second terminal device transmits the second data to the terminal device over the SCI, the PSCCH, or the PSSCH. In a case where a large amount of data is to be transmitted, the second data is transmitted over the broadcast message; the RRC message, the PDSCH, the PSSCH, or the like. In a case where high timeliness is required, the first data is transmitted over the MAC CE, the DCI, the PDCCH, the downlink message in the random access procedure, the dedicated downlink channel for AL, the dedicated downlink channel for ML, the network capability indication, the SCI, the PSCCH, or the like.

FIG. 4 is a schematic flowchart of a method for transmitting data according to some embodiments of the present disclosure. The method is optionally applied to the system illustrated in FIG. 1, but is not limited thereto. The method includes the following process.

In S410, a second communication device receives processed data, wherein the processed data is acquired by processing, by a first communication device, a plurality of pieces of information to be processed.

In some embodiments, the plurality of pieces of information to be processed includes: data associated with model performance monitoring, training, and testing or usage within the first communication device.

In some embodiments, each of the plurality of pieces of information to be processed includes at least one of: a channel; a feature vector representing CSI; input information of a model; or output information of a model.

In some embodiments, the channel includes at least one of: an initial channel formed by time-domain information, frequency-domain information, angle-domain information, and antenna-domain information; a channel acquired by extracting information in a time domain from the initial channel and selecting a subset of time-domain information; a channel acquired by extracting information in a frequency domain from the initial channel and selecting a subset of frequency-domain information; a channel acquired by extracting information in an angle domain from the initial channel and selecting a subset of angle-domain information; a channel acquired by extracting information in an antenna domain from the initial channel and selecting a subset of antenna-domain information; or a channel acquired by quantizing the initial channel.

In some embodiments, the feature vector representing the CSI includes a feature vector representing the CSI acquired by performing SVD on the channel.

In some embodiments, the input information of the model includes at least one of the channel or the feature vector representing the CSI.

In some embodiments, the output information of the model includes at least one of the channel or the feature vector representing the CSI.

In some embodiments, processing the plurality of pieces of information to be processed includes: acquiring a mean value of the plurality of pieces of information to be processed; and acquiring a mean value of the plurality of pieces of information to be processed upon element-wise processing.

In some embodiments, the element-wise processing of the plurality of pieces of information to be processed includes at least one of: taking absolute values of elements in the plurality of pieces of information to be processed; taking modulus values of elements in the plurality of pieces of information to be processed; taking squares of absolute values of elements in the plurality of pieces of information to be processed; taking squares of modulus values of elements in the plurality of pieces of information to be processed; or multiplying elements in the plurality of pieces of information to be processed by conjugates of the elements.

In some embodiments, acquiring the mean value includes at least one of: taking a mean value of the information based on a number of samples; taking a mean value of internal elements in the information; or taking a mean value of internal elements in the information and then taking a mean value of a number of samples.

In some embodiments, taking the mean value of the internal elements of the information includes: taking a mean value of a total number of the internal elements of the information; and taking a mean value of a number of elements in a dimension of the internal elements of the information.

In some embodiments, the second communication device is a terminal device; the plurality of pieces of information to be processed includes a plurality of pieces of first information to be processed in the terminal device; and the processed data includes first data acquired by processing the plurality of pieces of first information in a first processing mode.

In some embodiments, the first information includes at least one of: tag data, assistance data, or input data of the model in the terminal device.

In some embodiments, the model in the terminal device is an encoder of a CSI generation model.

In some embodiments, the first data is transmitted over at least one of: an RRC message; UCI; an uplink message in a random access procedure; a PUCCH; a PUSCH; a dedicated uplink channel for AI and/or ML; a terminal device capability report message; SCI; a PSCCH; or a PSSCH.

In some embodiments, the second communication device is a network device; the plurality of pieces of information to be processed includes a plurality of pieces of second information to be processed in the network device; and the processed data includes second data acquired by processing the plurality of pieces of second information in a second processing mode.

In some embodiments, the second information includes at least one of: evaluation data, assistance data, or output data of the model in the network device.

In some embodiments, the model in the network device is a decoder of at least one of a CSI recovery model or a CSI prediction model.

In some embodiments, the second data is transmitted over at least one of:
a broadcast message; an RRC message; a MAC CE; DCI; a downlink message in a random access procedure; a PDCCH; a PDSCH; a dedicated downlink channel for AI and/or ML; a network capability indication; SCI; a PSCCH; or a PSSCH.

For a specific example of the communication device performing the method 400 for transmitting data according to this embodiment, reference may be made to the related description of the communication device in the method 300 for transmitting data, which is not described herein for brevity.

The method for transmitting data according to some embodiments of the present disclosure may include the following content:

1. Evaluation data construction method

The design of this construction method involves the following: in the performance evaluation of an AI/ML scheme, multiple transmissions of tag data and evaluation data are circumvented. Instead, processed data, which is derived from the original tag and evaluation data, is used as the effective basis for the assessment.

The basic principle of the design is as follows: when the evaluation of an AI/ML scheme relies on a comprehensive result from multiple evaluations rather than strictly on any single one, the transmission of data for each individual evaluation may be avoided. This is achieved by adopting a method for integrating and processing the information from multiple instances-to-be-evaluated before the evaluation information is transmitted. In this way, information pre-processing is used to replace the transmission of redundant information over the air interface. This is coupled with a corresponding signaling design to ensure that the UE and the network may align on a consistent understanding of the evaluation scheme being adopted or selected for use.

1.1 Data transmission from the UE to the network

In issues such as AI/ML-based CSI compression/recovery and CSI prediction, the UE transmits first data to the network. The first fata is acquired by applying a first processing method to first information.

First information (A1) may be one of the following types of information:

(1) Channel H1. For example, the channel H1 acquired by the UE through channel estimation. As another example, the channel H1 composed of time-domain information, frequency-domain information, angle-domain information, and antenna-domain information. As another example, the channel H1 acquired by performing information extraction on the channel H1 in the time domain, frequency domain, angle domain, and antenna domain, by selecting a subset of time-domain information, a subset of frequency-domain information, a subset of angle-domain information, and a subset of antenna-domain information (this may also be tagged as a channel H1-1 for distinguishment from the channel H1 before extraction). As another example, the channel H1 acquired by applying k-bit quantization to the channel H1 (this may also be labeled as a channel H1-2 for distinguishment from the channel H1 before quantization).
(2) Feature vector W1 representing CSI information. For example, the feature vector W1 representing CSI information is acquired by the UE performing singular value decomposition (SVD) on channel H1.
(3) Input information X1 of the AI/ML model. For example, the input information of an AI/ML CSI compression and recovery model is H1 or W1.

The first processing method may include one of the following schemes:

(1) Acquisition of a mean value of the first information A1, as exemplified hereinafter:

For example, the first information A1 is composed of M1 elements. For example, the First Information A1 is a matrix with dimensions [s1, s2, s3], wherein s1 * s2 * s3 = M1.

First data B1 may be at least one of the following examples:
The first data B1 is acquired by averaging N instances of the first information A1 by the number of samples (averaging by N).

For N instances of the first information A1, where each instance of the first information A1 is composed of M1 elements, the first data B1 is acquired by taking the mean value over the internal elements for each instance of the first information A1 (averaging over M1, or averaging over s1, or averaging over s2, or averaging over s3).

For N instances of the first information A1, where each instance of the first information A1 is composed of M1 elements, the first data B1 is acquired by taking the mean value over the internal elements for each instance of the first information A1 (averaging over M1, or averaging over s1, or averaging over s2, or averaging over s3), and taking the mean value over the number of samples for the N instances of the first information A1 (averaging over N).

(2) Acquisition of the mean value by processing the elements of the first information A1, as exemplified hereinafter:

For example, the first information A1 is composed of M1 elements. For example, the first information A1 is a matrix with dimensions [s1, s2, s3], wherein s1 * s2 * s3 = M1.

The first data B1 may be at least one of the following examples:
For N instances of the first information A1, where each instance of the first information A1 is composed of M1 elements, a process is applied to the M1 elements of each instance of the first information A1, for example, taking the absolute value of the elements in a sample, or the modulus of the elements in a sample, or the square of the absolute value of the elements in a sample, or the square of the modulus of the elements in a sample, or multiplying an element in the sample by its conjugate. The mean value of the N processed samples mentioned above is taken (averaging over N) to acquire the first data B1.

For N instances of the first information A1, where each instance of the first information A1 is composed of M1 elements, a process is applied to the M1 elements of each instance of the first information A1, for example, taking the absolute value, or the modulus, or the square of the absolute value, or the square of the modulus, or the square of the modulus of an element in a sample, or multiplying an element in a sample by its conjugate. For the N processed samples mentioned above, the first data B1 is acquired by taking the mean value over the internal elements of a sample (averaging over M1, or averaging over s1, or averaging over s2, or averaging over s3)..

For N instances of the First Information A1, where each instance of the first information A1 is composed of M1 elements, a process is applied to the M1 elements of each instance of the first information A1, for example, taking the absolute value, or the modulus, or the square of the absolute value, or the square of the modulus, or the square of the modulus of an element in a sample, or multiplying an element in a sample by its conjugate. For the N processed samples mentioned above, the first data B1 is acquired by taking the mean value over the internal elements of a sample (averaging over M1, or averaging over s1, or averaging over s2, or averaging over s3), and taking the mean value over the number of samples (averaging over N).

1.2 Data transmission from the network to the UE

In issues such as AI/ML-based CSI compression/recovery and CSI prediction, the network transmits second data to the UE. The second data is acquired by applying a second processing method to second information.

Second information (A2) may be one of the following types of information:

(1) Channel H2

For example, in an AI/ML-based channel information compression and recovery process, the channel H2 is acquired by the network using a channel information recovery scheme. As another example, the channel H2 is composed of time-domain information, frequency-domain information, angle-domain information, and antenna-domain information. As another example, the channel H2 is obtained by performing information extraction on the channel H2 in the time domain, frequency domain, angle domain, and delay domain, by selecting a subset of time-domain information, a subset of frequency-domain information, a subset of angle-domain information, and a subset of antenna-domain information (this may also be labeled as a channel H2-1 for distinguishment from the channel H2 before extraction). As another example, the channel H2 is acquired by applying k-bit quantization to the channel H2 (this may also be labeled as a channel H2-2 for distinguishment from the channel H2 before quantization).

For example, in an AI/ML-based channel information prediction process, the channel H2 is acquired by the network using a channel information prediction scheme. As another example, the channel H2 is composed of time-domain, frequency-domain information and angle-domain, delay-domain information. For example, the channel H2 is acquired by performing information extraction on the channel H2 in the time domain, frequency domain, angle domain, and delay domain, by selecting a subset of time-domain information, a subset of frequency-domain information, a subset of angle-domain information, and a subset of antenna-domain information (this may also be labeled as a channel H2-3 for distinguishment from the channel H2 before extraction). As another example, the channel H2 is acquired by applying k-bit quantization to the channel H2 (this may also be labeled as a channel H2-4 for distinguishment from the channel H2 before quantization).

(2) Feature vector W2 representing CSI, as exemplified below:

For example, in an AI/ML-based CSI compression and recovery process, W2 is a feature vector representing CSI information that is acquired by the network using a CSI recovery scheme.

For example, in an AI/ML-based CSI prediction process, W2 is a feature vector representing CSI information that is acquired by the network using a CSI prediction scheme.

(3) Output information X2 of the AI/ML model

For example, the output information of an AI/ML CSI compression/recovery model may be H2 or W2. Similarly, the output of an AI/ML CSI prediction model may be H2 or W2.

Although the descriptions for A1 (in Example 1.1) and A2 (in Example 1.2) are similar, these two pieces of information may belong to two different categories. For instance, A1 is original information acquired on the UE side and may serve as a baseline and/or tag information. A2 is what the network acquires using schemes like CSI feedback recovery or CSI prediction, which may be lossy information and the information to be evaluated. The performance evaluation may be conducted by comparing how large the difference is between A1 and A2.

The second processing method may include one of the following schemes:

(1) Acquisition of the mean value of second information A2, as exemplified below:

For instance, the second Information A2 is composed of M2 elements. For example, the second Information A2 is a matrix with dimensions [q1, q2, q3], wherein q1 * q2 * q3 = M2.

Second data B2 may be derived from at least one of the following:

The second data B2 is acquired by taking N instances of the second information A2 and averaging the N instances over the number of samples (averaging over N).

For N instances of the second information A2, where each is composed of M2 elements, the second data B2 is acquired by averaging over the internal elements for each instance (e.g., averaging over M2, or over the q1, q2, or q3 dimension).

For N instances of the second information A2, each composed of M2 elements, the second data B2 is acquired by first averaging over the internal elements for each instance and then averaging the results over the number of samples.

(2) Acquisition of the mean value by processing the elements of the second information A2, as exemplified below:

For instance, the second information A2 is composed of M2 elements. For example, the second information A2 is a matrix with dimensions [q1, q2, q3], wherein q1 * q2 * q3 = M2.
The second data B2 may be derived from at least one of the following:
For N instances of the second information A2, each instance of the second information A2 is composed of M2 elements. A process is applied to the M2 elements of each instance of the second information A2. For example, taking the absolute value of the elements in a sample, or the modulus of the elements in a sample, or the square of the absolute value of the elements in a sample, or the square of the modulus of the elements in a sample, or multiplying an element in the sample by its conjugate. The mean value of the N processed samples is taken (averaging over N) to acquire the second data B2.
For N instances of the second information A2, where each instance of the second information A2 is composed of M2 elements, a process is applied to the M2 elements of each instance of the second information A2. For example, taking the absolute value, or the modulus, or the square of the absolute value, or the square of the modulus, or the square of the modulus of an element in a sample, or multiplying an element in a sample by its conjugate. For the N processed samples, the second data B2 is acquired by taking the mean value over the internal elements of a sample (averaging over M2, or averaging over q1, or averaging over q2, or averaging over q3).
For N instances of the second information A2, where each instance of the second information A2 is composed of M2 elements, a process is applied to the M2 elements of each instance of the second information A2. For example, taking the absolute value, or the modulus, or the square of the absolute value, or the square of the modulus, or the square of the modulus of an element in a sample, or multiplying an element in a sample by its conjugate. For the N processed samples, the second data B2 is acquired by taking the mean value over the internal elements of a sample (averaging over M2, or averaging over q1, or averaging over q2, or averaging over q3), and taking the mean value over the number of samples (averaging over N).
Compared to the method of supervising AI/ML performance by transmitting multiple samples, by adopting the scheme of the embodiments of the present application, one may instead use the transmission of the processed result of multiple samples for statistical processing, thereby greatly reducing the over-the-air overhead required for the transmission of the data-to-be-evaluated and tag data.

1.3 Partial examples in specific AI/ML-based CSI compression, recovery, and prediction schemes:

Example 1

In an AI/ML-based CSI feedback scheme or in a CSI prediction scheme, for example, when the performance evaluation of the AI/ML scheme is conducted on the network side, the UE transmits the feature vector W1, representing CSI information, to the network. The number of elements in W1 is, for example, M1. The dimensions of W1 may be, for example, [s1, s2], wherein s1 is the number of sub-bands and s2 is the number of transmit ports. Alternatively, the dimensions of W1 may be, for example, [s1, s2, s3], wherein s1 represents the number of sub-bands, s2 represents the number of transmit ports, and s3 represents the two real and imaginary dimensions of the complex numbers.
The first information W1 is composed of M1 elements. For example, W1 may be represented as [w_1, w_2, ..., w_M1]. A process is applied to the M1 elements of W1, such as taking the absolute value of each element [|w_1|, |w_2|, ..., |w_M1|], or the modulus of each element [∥w_1∥, ∥w_2∥, ..., ∥w_M1∥], or the square of the absolute value of each element [|w_1|², |w_2|², ..., |w_M1|²], or the square of the modulus of each element [∥w_1∥², ∥w_2∥², ..., ∥w_M1∥²], or the product of each element with its conjugate [w_1w_1', w_2w_2', ..., w_M1*w_M1'] to form the processed first information W1 (which may also be labeled as W1' for distinguishment from the pre-processed W1, and the following examples are similar). N instances of the processed first information W1, for example, N instances of the processed first information W1_1, ..., W1_N, are then averaged over the N samples to obtain the second data B1, for

example, $\mathrm{B1} = \dfrac{1}{N} \sum_{i=1}^{N} W1\_i$ .

Example 2

In an AI/ML-based CSI feedback scheme or in a CSI prediction scheme, for example, when the performance evaluation of the AI/ML scheme is conducted on the UE side, the network needs to transmit the feature vector W2, representing CSI information, to the UE. The number of elements in W2 is, for example, M2. The dimensions of W2 may be, for example, [q1, q2], wherein q1 represents the number of sub-bands and q2 represents the number of transmit ports. Alternatively, the dimensions may be [q1, q2, q3], wherein q1 represents the number of sub-bands, q2 represents the number of transmit ports, and q3 represents the two real and imaginary dimensions of the complex numbers.
The second information W2 is composed of M2 elements, for example, W2 may be represented as [w_1, w_2, ..., w_M2]. A process is applied to the M2 elements of W2, such as taking the absolute value of each element [|w_1|, |w_2|, ..., |w_M2|], or the modulus of each element [‖w_1‖, ‖w_2‖, ..., ‖w_M2‖], or the square of the absolute value of each element [|w_1|², |w_2|², ..., |w_M2|²], or the square of the modulus of each element [‖w_1‖², ‖w_2‖², ..., ‖w__M2‖²], or the product of each element with its conjugate [w_1w_1', w_2w_2', ..., w_M2w_M2'] to form the processed first information W2. N instances of the aforementioned processed first information W2, for example, W2_1, ..., W2_N, are then averaged over the N samples to acquire the second data B2, for example, B2 =

$$B1 = \frac{1}{N}\sum_{i=1}^{N} W2\_i \ .$$

Example 3

In an AI/ML-based CSI feedback scheme or in a CSI prediction scheme, for example, when the performance evaluation of the AI/ML scheme is conducted on the network side, the UE transmits the channel information H1 to the network. The number of elements in H1 is, for example, M1. The dimensions of H1 may be, for example, [s1, s2], wherein the first dimension is s1 time-domain or frequency-domain elements, and the second dimension is s2 angle-domain or antenna-domain elements. Alternatively, the dimensions of H1 may be, for example, [s1, s2, s3], wherein the first dimension is s1 time-domain or frequency-domain elements, the second dimension is s2 angle-domain or antenna-domain elements, and the third dimension represents the two real and imaginary parts of the complex numbers.

The first information H1 is composed of M1 elements. For example, H1 may be represented as [h_1, h_2, ..., h_M1]. A process is applied to the M1 elements of H1, such as taking the absolute value of each element [|h_1|, |h_2|, ..., |h_M1|], or the modulus of each element [‖h_1‖, ‖h_2‖, ..., ‖h_M1‖], or the square of the absolute value of each element [|h_1|², |h_2|², ..., |h_M1|²], or the square of the modulus of each element [‖h_1‖², ‖h_2‖², ..., ‖h_M1‖²], or the product of each element with its conjugate [h_1h_1', h_2h_2', ..., h_M1*h_M1'] to form the processed First Information H1. N instances of the processed first information H1, for example, N instances of the processed first information H1_1, ..., H1_N, are then averaged over the N samples to obtain the Second data B1, for example,

$$B1 = \frac{1}{N}\sum_{i=1}^{N} H1\_i \ .$$

Example 4

In an AI/ML-based CSI feedback scheme or in a CSI prediction scheme, for example, when the performance evaluation of the AI/ML scheme is conducted on the UE side, the network transmits the channel information H2 to the UE. The number of elements in H2 is, for example, M2. The dimensions of H2 may be, for example, [s1, s2], wherein the first dimension is s1 time-domain or frequency-domain elements, and the second dimension is s2 angle-domain or antenna-domain elements. Alternatively, the dimensions of H2 may be, for example, [s1, s2, s3], wherein the first dimension is s1 time-domain or frequency-domain elements, the second dimension is s2 angle-domain or antenna-domain elements, and the third dimension represents the two real and imaginary parts of the complex numbers.

The second information H2 is composed of M2 elements. For example, H2 may be represented as [h_1, h_2, ..., h_M2]. A process is applied to the M2 elements of H2, such as taking the absolute value of each element [|h_1|, |h_2|, ..., |h_M2|], or the modulus of each element [‖h_1‖, ‖h_2‖, ..., ‖h_M2‖], or the square of the absolute value of each element [|h_1|², |h_2|², ..., |h_M2|²], or the square of the modulus of each element [‖h_1‖², ‖h_2‖², ..., ‖h_M2‖²], or the product of each element with its conjugate [h_1h_1', h_2h_2', ..., h_M2h_M2'] to form the processed first information H2. N instances of the processed first information H2, for example, N instances of the processed first information H2_1, ..., H2_N, are then averaged over the N samples to obtain the second data B2, for example, B2= $\frac{1}{N}\sum_{i=1}^{N} H2\_i \ .$

2. Evaluation data indication and/or transmission method

The first part mainly includes a method for constructing the evaluation data, and the second part may specify a method for indicating and/or transmitting evaluation data.

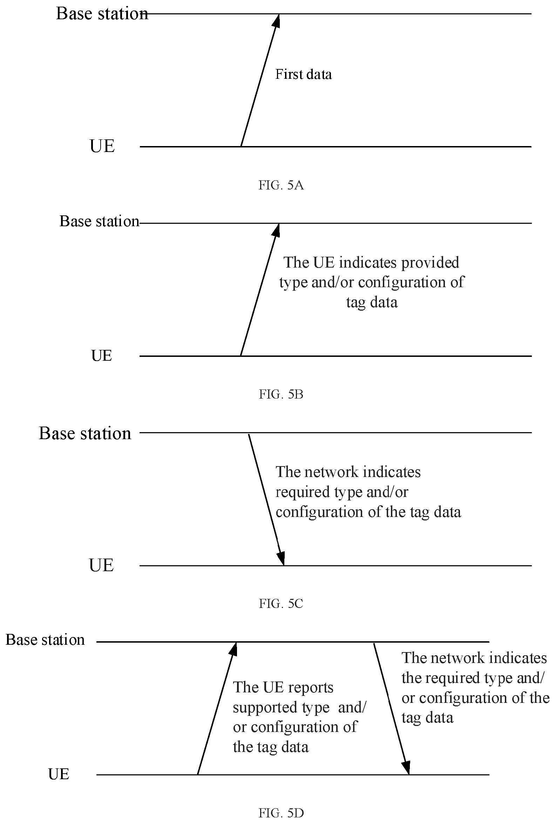

2.1 The UE transmits the first data to the network, e.g., a base station, as illustrated in the FIG. 5A.

(1) The UE indicates provided type and/or configuration of the tag data, as illustrated in FIG. 5B. The UE then transmits the first data to the network. Alternatively, the UE transmits the first data to the network while indicating the provided type and/or configuration of the tag data.

(2) The network indicates required type and/or configuration of the tag data, as illustrated in FIG. 5C. The UE then transmits the first data to the network.

(3) The UE reports supported type and/or configuration of the tag data, and the network indicates the required type and/or configuration of the tag data, as illustrated in FIG. 5D. Then, the UE transmits the first data to the network.

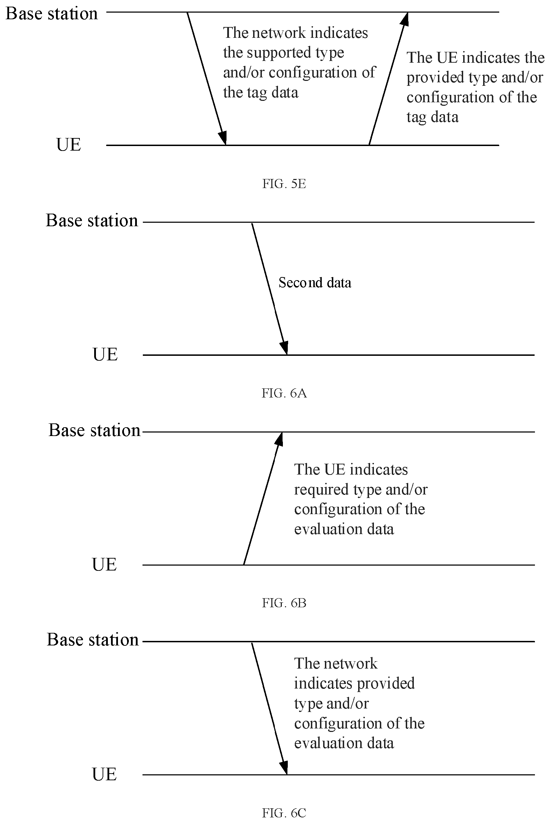

(4) The network indicates the supported type and/or configuration of the tag data, and the UE indicates the provided type and/or configuration of the tag data, as illustrated in FIG. 5E. Then, the UE transmits the first data to the network, or the UE transmits first data to the network while indicating the provided type and/or configuration of the tag data.

2.2 The network, e.g., the base station, transmits second data to the UE, as illustrated in the FIG. 6A.

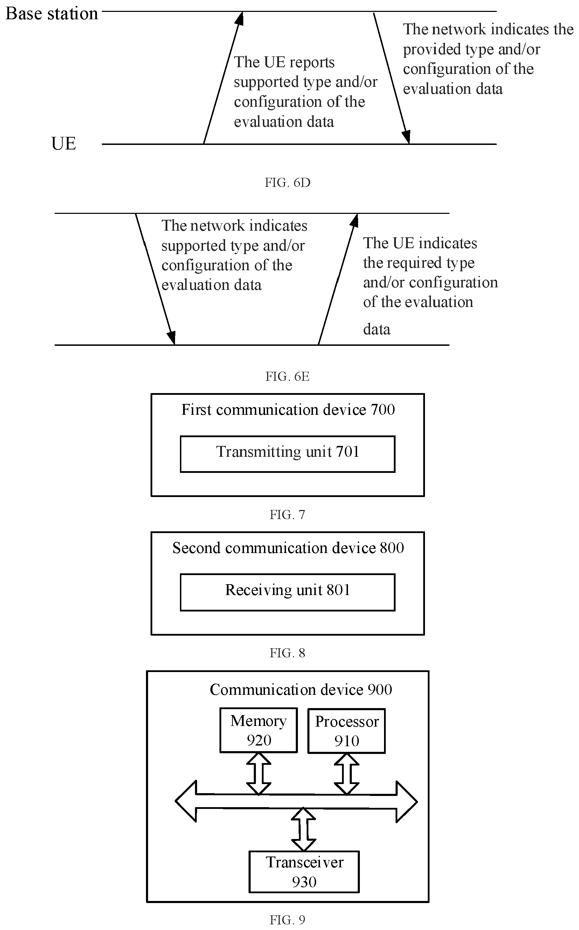

(1) The UE indicates required type and/or configuration of the evaluation data, as illustrated in the FIG. 6B. Then, the network transmits the second data to the UE.
(2) The network indicates provided type and/or configuration of the evaluation data, as illustrated in the FIG. 6C. Then, the network transmits the second data to the UE. Alternatively, the network transmits the second data to the UE while indicating the provided type and/or configuration of the evaluation data.
(3) The UE reports supported type and/or configuration of the evaluation data, and the network indicates the provided type and/or configuration of the evaluation data, as illustrated in the FIG. 6D. Then, the network transmits the second data. Alternatively, the network transmits the second data to the UE while indicating the provided type and/or configuration of the evaluation data.
(4) The network indicates the supported type and/or configuration of the evaluation data, and the UE indicates the required type and/or configuration of the evaluation data, as illustrated in the FIG. 6E. Then, the network transmits the second data to the UE.

The uplink transmission in the embodiments of the present disclosure, that is, the UE transmits data to the base station, may be implemented via one or more of:

(1) an RRC message; (2) UCI; (3) an uplink message in a random access procedure, for example, MsgA or Msg3; (4) a PUCCH; (5) a PUSCH; (6) dedicated uplink channels for AL/ML; and (7) a terminal device capability report message.

The downlink transmission in the embodiments of the present disclosure, that is, the base station transmits data to the UE, may be implemented via one or more of:

(1) a broadcast message, for example, MIB, SIB1, or SIBx; (2) an RRC message; (3) a MAC CE. (4) downlink control information (DCI); (5) a downlink message in a random access procedure, for example, MsgB, Msg2 or Msg4; (4) a PDCCH; (5) a PDSCH; (6) dedicated downlink channels for AI/ML; and (7) a network capability indication.

The base station in the above example may also be replaced with other terminal devices in a sidelink communication scenario.

2.3 The contents of the above mentioned instructions and reports may include one or more of:

(1) Type of the tag data and/or the evaluation data, for example, the channel H1, the feature vector W1 representing the CSI, and the input information X1 of a model of AL/ML;
(2) Configuration of the tag data and/or the evaluation data, for example, the number of samples (N) of the first data acquired by statistical collection, processing and averaging;
(3) Configuration of the tag data and/or the evaluation data, for example, a method for acquiring the first data by statistical collection, processing and averaging;

For example, the indication method includes taking a mean value of the first information and taking a mean value of the first information upon element-wise processing.

For example, the averaging includes taking a mean value of the N samples, taking a mean value of each element in the sample, and taking a mean value of the N samples and different elements in the sample.

For example, the processing includes taking absolute values of elements in the sample, or taking modulus values of elements in the sample, or taking squares of the absolute values of elements in the sample, or taking squares of the modulus values of the elements in the sample, or multiplying elements in the sample by conjugates of the elements.

(4) Configuration of the tag data and/or the evaluation data, for example, a format, a frequency-domain configuration, a time-domain configuration, an angle-domain configuration and an antenna-domain configuration of the channel information H1, a subset of time-domain information, a subset of frequency-domain information, a subset of angle-domain information, and a subset of antenna-domain information of the channel information H1; for example, channel information for a specific delay, channel information for a specific frequency domain, channel information for a specific angle, and channel information for a specific antenna (antenna port).
(5) Configuration of the tag data and/or the evaluation data, for example, a frequency-domain configuration, a time-domain configuration, an angle-domain configuration, an antenna-domain configuration of the channel, an acquisition mode indication of the channel information W1, a W1 format, and a sub-band indication of W1; for example, a sub-band size, a number of sub-bands, and the like.
(6) Indicatable configuration of the tag data and/or the evaluation data includes: a quantization scheme, a quantization granularity, a quantization step, and quantization precision information.

The method for transmitting data according to the present disclosure includes wireless AI data tag transmission, mean value transmission, auxiliary information transmission, and the like. In the performance evaluation of an AI/ML scheme, the multiple transmission of the tag data and the evaluation data are avoided, and the processed data of the tag data and the evaluation data is used as the tag data and the evaluation data. Therefore, when the evaluation of the AL/ML scheme does not depend strictly on the result of a single evaluation, but on the integrated result of multiple evaluations, the multiple transmissions of evaluation data are avoided. Before the transmission of the evaluation data, the evaluation data to be evaluated shall be integrated several times. The transmission of redundant air interface information shall be replaced by information preprocessing.

FIG. 7 is a schematic block diagram of a first communication device 700 according to some embodiments of the present disclosure. The first communication device 700 may include: a transmitting unit 701, configured to transmit processed data, wherein the processed data is acquired by processing a plurality of pieces of information to be processed.

In some embodiments, the plurality of pieces of information to be processed includes: data associated with model performance monitoring, training, and testing or usage within the first communication device.

In some embodiments, one of the plurality of pieces of information to be processed includes at least one of: a channel; a feature vector representing CSI; input information of a model; or output information of a model.

In some embodiments, the channel includes at least one of: an initial channel formed by time-domain information, frequency-domain information, angle-domain information, and antenna-domain information; a channel acquired by extracting information in a time domain from the initial channel and selecting a subset of time-domain information; a channel acquired by extracting information in a frequency domain from the initial channel and selecting a subset of frequency-domain information; a channel acquired by extracting information in an angle domain from the initial channel and selecting a subset of angle-domain information; a channel acquired by extracting information in an antenna domain from the initial channel and selecting a subset of antenna-domain information; or a channel acquired by quantizing the initial channel.

In some embodiments, the feature vector representing the CSI includes a feature vector representing the CSI acquired by performing SVD on the channel.

In some embodiments, the input information of the model includes at least one of the channel or the feature vector representing the CSI.

In some embodiments, the output information of the model includes at least one of the channel or the feature vector representing the CSI.

In some embodiments, processing the plurality of pieces of information to be processed includes: acquiring a mean value of the plurality of pieces of information to be processed; and acquiring a mean value of the plurality of pieces of information to be processed upon element-wise processing.

In some embodiments, the element-wise processing of the plurality of pieces of information to be processed includes at least one of: taking absolute values of elements in the plurality of pieces of information to be processed; taking modulus values of elements in the plurality of pieces of information to be processed; taking squares of absolute values of elements in the plurality of pieces of information to be processed; taking squares of modulus values of elements in the plurality of pieces of information to be processed; or multiplying elements in the plurality of pieces of information to be processed by conjugates of the elements.

In some embodiments, acquiring the average values includes at least one of: taking a mean value of the information based on a number of samples; taking a mean value of internal elements in the information; or taking a mean value of internal elements in the information and then taking a mean value of a number of samples.

In some embodiments, taking the mean value of the internal elements of the information includes: taking a mean value of a total number of the internal elements of the information; and taking a mean value of a number of elements in a dimension of the internal elements of the information.

In some embodiments, the first communication device is a terminal device; and the plurality of pieces of information to be processed includes: a plurality of pieces of first information to be processed in the terminal device, and the processed data includes first data acquired by processing the plurality of pieces of first information in a first processing mode.

In some embodiments, the first information includes at least one of: tag data, assistance data, or input data of the model in the terminal device.

In some embodiments, the model in the terminal device is an encoder of a CSI generation model.

In some embodiments, the first data is transmitted over at least one of:

an RRC message; UCI; an uplink message in a random access procedure; a PUCCH; a PUSCH; dedicated uplink channels for AI and/or ML; a terminal device capability report message; SCI; a PSCCH; or a physical sidelink shared channel (PSSCH).

In some embodiments, the first communication device is a network device; and the plurality of pieces of information to be processed includes: a plurality of pieces of second information to be processed in the network device, and the processed data includes second data acquired by processing the plurality of pieces of second information in a second processing mode.

In some embodiments, the second information includes at least one of: evaluation data, assistance data, or output data of the model in the network device.

In some embodiments, the model in the network device is a decoder of a CSI reconstruction model and/or a CSI prediction model.

In some embodiments, the second data is transmitted over at least one of:

a broadcast message; an RRC message; a MAC CE; DCI; a downlink message in a random access procedure; a PDCCH; a PDSCH; dedicated downlink channels for AI and/or ML; a network capability indication; SCI; a PSCCH; or a PSSCH.

The first communications device 700 according to the embodiments of the present disclosure may implement the corresponding functions of the first communications device according to embodiments of the above mentioned method embodiments. For procedure, function, implementation method and beneficial effect corresponding to each module (sub-module, unit, or component) of the first communication device 700, reference may be made to the corresponding description of the method embodiments above, which is not repeated herein. It should be noted that the described functions of the modules (sub-modules, units, or components) of the first communication device 700 according to some embodiments may be implemented by different modules (sub-modules, units, or components) or may be implemented by the same module (sub-modules, units, or components).

FIG. 8 is a schematic block diagram of a second communication device 800 according to some embodiments of the present disclosure. The second communication device 800 includes: a receiving unit, configured to receive processed data, wherein the processed data is acquired by processing, by a first communication device, a plurality of pieces of information to be processed.

In some embodiments, the plurality of pieces of information to be processed includes: data associated with model performance monitoring, training, and testing or usage within the first communication device.

In some embodiments, one of the plurality of pieces of information to be processed includes at least one of: a channel; a feature vector representing CSI; input information of a model; or output information of a model.

In some embodiments, the channel includes at least one of: an initial channel formed by time-domain information, frequency-domain information, angle-domain information, and antenna-domain information; a channel acquired by extracting information in a time domain from the initial channel and selecting a subset of time-domain information; a channel acquired by extracting information in a frequency domain from the initial channel and selecting a subset of frequency-domain information; a channel acquired by extracting information in an angle domain from the initial channel and selecting a subset of angle-domain information; a channel acquired by extracting information in the antenna-domain from the initial channel and selecting a subset of antenna-domain information; or a channel acquired by quantizing the initial channel.

In some embodiments, the feature vector representing the CSI includes a feature vector representing the CSI acquired by performing SVD on the channel.

In some embodiments, the input information of the model includes at least one of the channel or the feature vector representing the CSI.

In some embodiments, the output information of the model includes at least one of the channel or the feature vector representing the CSI.

In some embodiments, processing the plurality of pieces of information to be processed includes: acquiring a mean value of the plurality of pieces of information to be processed; and acquiring a mean value of the plurality of pieces of information to be processed upon element-wise processing.

In some embodiments, the element-wise processing of the plurality of pieces of information to be processed includes at least one of: taking absolute values of elements in the plurality of pieces of information to be processed; taking modulus values of elements in the plurality of pieces of information to be processed; taking squares of absolute values of elements in the plurality of pieces of information to be processed; taking squares of modulus values of elements in the plurality of pieces of information to be processed; or multiplying elements in the plurality of pieces of information to be processed by conjugates of the elements.

In some embodiments, acquiring the mean values includes at least one of: taking a mean value of the information based on a number of samples; taking a mean value of internal elements in the information; or taking a mean value of internal elements in the information and then taking a mean value of a number of samples.

In some embodiments, taking the mean value of the internal elements of the information includes: taking a mean value of a total number of the internal elements of the information; and taking a mean value of a number of elements in a dimension of the internal elements of the information.

In some embodiments, the second communication device is a terminal device; and the plurality of pieces of information to be processed includes: a plurality of pieces of first information to be processed in the terminal device, and the processed data includes first data acquired by processing the plurality of pieces of first information in a first processing mode.

In some embodiments, the first information includes at least one of: tag data, assistance data or input data of the model in the terminal device.

In some embodiments, the model in the terminal device is an encoder of a CSI generation model.

In some embodiments, the first data is transmitted over at least one of: an RRC message; UCI; an uplink message in a random access procedure; a PUCCH; a PUSCH; dedicated uplink channels for AI and/or ML; a terminal device capability report message; SCI; a PSCCH; or a PSSCH.

In some embodiments, the second communication device is a network device; the plurality of pieces of information to be processed includes a plurality of pieces of second information to be processed in the network device; and the processed data includes second data acquired by processing the plurality of pieces of second information in a second processing mode.

In some embodiments, the second information includes at least one of: evaluation data, assistance data, or output data of the model in the network device.

In some embodiments, the model in the network device is a decoder of a CSI reconstruction model and/or a CSI prediction model.

In some embodiments, the second data is transmitted over at least one of: a broadcast message; an RRC message; a MAC CE; DCI; a downlink message in a random access procedure; a PDCCH; a PDSCH; a dedicated downlink channel for at least one of AI or ML; a network capability indication; SCI; a PSCCH; or a PSSCH.

The second communications device 800 according to some embodiments of the present disclosure may implement the corresponding functions of the second communications device 800 according to embodiments of the above mentioned method embodiments. For procedure, functions, implementation methods and beneficial effects corresponding to the modules (sub-modules, units, or components) of the second communication device 800, reference may be made to the corresponding description of the method embodiments, which is not repeated herein. It should be noted that the described functions of the modules (sub-modules, units, or components) of the second communication device 800 according to some embodiments may be implemented by different modules (sub-modules, units, or components) or may be implemented by the same module (sub-module, unit, or component).

FIG. 9 is a schematic block diagram of a communication device 900 according to some embodiments of the present disclosure. The communication device 900 includes a processor 910. The processor 910 is configured to load and execute the one or more computer programs stored in a memory, causing the communication device 900 to perform the method according to the embodiments of the present disclosure.

In some embodiments, the communication device 900 further includes a memory 920. The processor 910, when loading and running the one or more computer programs stored in the memory 920, causes the communication device 900 to perform the method according to the embodiments of the present disclosure.

The memory 920 may be a component independent of the processor 910, or may be integrated in the processor 910.

In some embodiments, the communication device 900 also includes a transceiver 930, and the processor 910 may control the transceiver 930 to communicate with the other device. In particular, the transceiver 930 may transmit information or data to the other device, or the transceiver 930 may receive information or data from the other devices.

The transceiver 930 may include a receiver and a transmitter. The transceiver 930 may further include antenna, and one or more antennas may be configured.

In some embodiments, the communication device 900 is the first communication device of the embodiment of the present disclosure, and the communication device 900 may implement the corresponding processes implemented by the first communication device in the method according to the embodiments of the present disclosure. For brevity, further details are not given herein.

In some embodiments, the communication device 900 is the second communication device of the embodiment of the present disclosure, and the communication device 900 may perform the corresponding processes performed by the second communication device in the each method according to the embodiments of the present disclosure. For brevity, further details are not given herein.

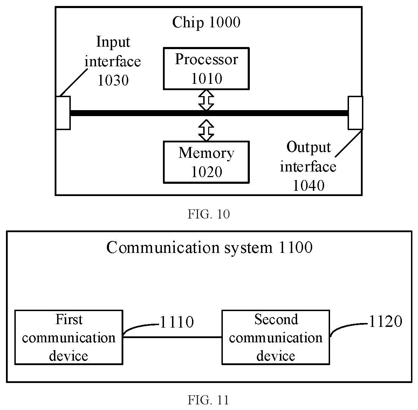

FIG. 10 is a schematic block diagram of a chip 1000 according to some embodiments of the present disclosure. The chip 1000 includes a processor 1010. The processor 910 is configured to load and execute the one or more computer programs stored in a memory to perform the method according to the embodiment of the present disclosure.

In some embodiments, the chip 1000 also includes a memory 1020. The processor 1010 is configured to load and execute the one or more computer programs stored in the memory 1020, causing the first communication device and the second communication device to perform the method according to the embodiments of the present disclosure.

The memory 1020 may be a component independent of the processor 1010, or may be integrated in the processor 1010.

In some embodiments, the chip 1000 also includes an input interface 1030. The processor 1010 may control the input interface 1030 to communicate with the other device or other chip. In particular, information or data transmitted by other devices or chips may be acquired.

In some embodiments, the chip 1000 also includes an output interface 1040. The processor 1010 may control the output interface 1040 to communicate with the other device or other chip. In particular, information or data may be output to other devices or chips.

In some embodiments, the chip may be applied to the first communication device in the embodiments of the present disclosure, and the chip may realize the corresponding processes implemented by the first communication device in each method according to the embodiments of the present disclosure. For brevity, further details are not given herein.

In some embodiments, the chip may be applied to the second communication device in the embodiments of the present disclosure, and the chip may perform the corresponding processes performed by the second communication device in each method according to the embodiments of the present disclosure. For brevity, further details are not given herein.

The chips applied to the first communication device and the second communication device may be the same chip or different chips.

It should be understood that the chips referred to in the embodiments of the present disclosure may also be called system on a chip, a chip on system, or the like.

The above mentioned processor may be a general-purpose processor, a digital signal processor (DSP), a field-programmable gate array (FPGA), an application specific integrated circuit (ASIC) or other programmer logical device, a transistor logic device, a discrete hardware component, and the like. The above mentioned general-purpose processor may be a microprocessor or other conventional processors.

The above mentioned memory may be a volatile memory or a non-volatile memory. Alternatively, the memory may include a volatile and a non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above-mentioned memory is an illustrative but not restrictive description. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. That is to say, the memory in the embodiments of the present disclosure is intended to include, but not be limited to, these and any other suitable types of memory.

FIG. 11 is a schematic block diagram of a communication system 1100 according to some embodiments of the present disclosure. The communication system 1100 includes a first communication device 1110 and a second communication device 1120.

The first communication device 1110 is configured to transmit processed data, wherein the processed data is acquired by processing a plurality of pieces of information to be processed.

The second communication device 1120 is configured to receive processed data, wherein the processed data is acquired by processing, by a first communication device, a plurality of pieces of information to be processed.

The first communication device 1110 is configured to implement the corresponding function implemented by the first communication device in the above mentioned method. The second communication device 1120 is configured to implement the corresponding function implemented by the second communication device in the above mentioned method. For brevity, further details are not given herein.

In the above embodiments, implementation may be implemented in whole or in part through software, hardware, firmware, or any combination of the software, hardware and the firmware. When implementation is implemented using software, implementation may be implemented in whole or in part in the form of a computer program product. The computer program product includes one or more computer instructions. When the one or more computer instructions are loaded and executed on a computer, processes or functions based on the embodiments of the present disclosure are generated in whole or in part. The computer may be a general-purpose computer, a special-purpose computer, a computer network, or other programmable device. The computer instruction may be stored in a computer-readable storage medium, or transmitted from a computer-readable storage medium to another computer-readable storage medium. For example, the computer instruction may be transmitted from a website site, a computer, a server, or a data center to another website site, another computer, another server, or another data center via wired (e.g., a coaxial cable, an optical fiber, a digital subscriber line (DSL)) or wireless (e.g., infrared, radio, or microwave) way. A computer-readable storage medium may be any available medium accessible to a computer or a data storage device such as a server or a data center integrating one or more available medium. The available medium may be a magnetic medium (e.g., a floppy disk, a hard disk, or a magnetic tape), an optical medium (e.g., a DVD), or a semiconductor medium (e.g., a solid state disk (SSD)).

It should be understood that in various embodiments of the present disclosure, the numerical order of the above mentioned processes does not imply the sequence of execution. The sequence of execution of each process shall be determined by function and inherent logic of the process, and shall not impose any limitation on the implementation process of the embodiments of the present disclosure.

Those skilled in the art will be able to understand clearly, for the convenience and brevity of description, the specific working processes of the above mentioned systems, apparatuses, and units may refer to the corresponding processes in the above mentioned method in the embodiments, and no further elaboration is given here.

The above description is merely the specific implementation of the present disclosure. However, the scope of protection of the present disclosure is not limited thereto. Any person skilled in the technical field may easily conceive of changes or substitutions within the technical scope disclosed in the present disclosure, and all such changes or substitutions shall be covered within the scope of protection of this application. Therefore, the scope of protection of this disclosure shall be subject to the scope of protection defined by the claims.

**Claims**

1. A method for transmitting data, performed by a first communication device, the method comprising: transmitting processed data, wherein the processed data is acquired by processing a plurality of pieces of information to be processed.

2. The method according to claim 1, wherein the plurality of pieces of information to be processed comprises:
data associated with model performance monitoring, training, and testing or usage within the first communication device.

3. The method according to claim 1, wherein one of the plurality of pieces of information to be processed comprises at least one of:

   a channel;
   a feature vector representing channel state information (CSI);
   input information of a model; or
   output information of a model.

4. The method according to claim 3, wherein the channel comprises at least one of:

   an initial channel formed by time-domain information, frequency-domain information, angle-domain information, and antenna-domain information;
   a channel acquired by extracting information in a time domain from the initial channel and selecting a subset of time-domain information;
   a channel acquired by extracting information in a frequency domain from the initial channel and selecting a subset of frequency-domain information;
   a channel acquired by extracting information in an angle domain from the initial channel and selecting a subset of angle-domain information;
   a channel acquired by extracting information in an antenna domain from the initial channel and selecting a subset of antenna-domain information; or

   a channel acquired by quantizing the initial channel.

5. The method according to claim 3, wherein the feature vector representing the CSI comprises a feature vector representing the CSI acquired by performing singular value decomposition (SVD) on the channel.

6. The method according to claim 3, wherein the input information of the model comprises at least one of the channel or the feature vector representing the CSI.

7. The method according to claim 3, wherein the output information of the model comprises at least one of the channel or the feature vector representing the CSI.

8. The method according to any one of claims 1 to 7, wherein processing the plurality of pieces of information to be processed comprises:

   acquiring a mean value of the plurality of pieces of information to be processed; and
   acquiring a mean value of the plurality of pieces of information to be processed upon element-wise processing.

9. The method according to claim 8, wherein the element-wise processing of the plurality of pieces of information to be processed comprises at least one of:

   taking absolute values of elements in the plurality of pieces of information to be processed;
   taking modulus values of elements in the plurality of pieces of information to be processed;
   taking squares of absolute values of elements in the plurality of pieces of information to be processed;
   taking squares of modulus values of elements in the plurality of pieces of information to be processed; or
   multiplying elements in the plurality of pieces of information to be processed by conjugates of the elements.

10. The method according to claim 8 or 9, wherein acquiring the average values comprises at least one of:

    taking a mean value of the information based on a number of samples;
    taking a mean value of internal elements in the information; or
    taking a mean value of internal elements in the information and then taking a mean value of a number of samples.

11. The method according to claim 10, wherein taking the mean value of the internal elements of the information comprises:

    taking a mean value of a total number of the internal elements of the information;
    taking a mean value of a number of elements in a dimension of the internal elements of the information.

12. The method according to any one of claims 1 to 11, wherein
the first communication device is a terminal device; and the plurality of pieces of information to be processed comprises
a plurality of pieces of first information to be processed in the terminal device, and the processed data comprises first data acquired by processing the plurality of pieces of first information in a first processing mode.

13. The method according to claim 12, wherein the first information comprises at least one of: tag data, assistance data, or input data of the model in the terminal device.

14. The method according to claim 13, wherein the model in the terminal device is an encoder of a CSI generation model.

15. The method according to any one of claims 12 to 14, wherein the first data is transmitted over at least one of:

   a radio resource control (RRC) message;
   uplink control information (UCI);
   an uplink message in a random access procedure;
   a physical uplink control channel (PUCCH);
   a physical uplink shared channel (PUSCH);
   a dedicated uplink channel for Artificial Intelligence (AI) and/or machine learning (ML);
   a terminal device capability report message;
   sidelink control information (SCI);
   a physical sidelink control channel (PSCCH); or
   a physical sidelink shared channel (PSSCH).

16. The method according to any one of claims 1 to 11, wherein
the first communication device is a network device; and the plurality of pieces of information to be processed comprises:
a plurality of pieces of second information to be processed in the network device, and the processed data comprises second data acquired by processing the plurality of pieces of second information in a second processing mode.

17. The method according to claim 16, wherein the second information comprises at least one of: evaluation data, assistance data, or output data of the model in the network device.

18. The method according to claim 17, wherein the model in the network device is a decoder of a CSI reconstruction model and/or a CSI prediction model.

19. The method according to any one of claims 16 to 18, wherein the second data is transmitted over at least one of:

   a broadcast message;
   an RRC message;
   a media access control (MAC) control element (CE);
   downlink control information (DCI);
   a downlink message in a random access procedure;
   a physical downlink control channel (PDCCH);
   a physical downlink shared channel (PDSCH);
   a dedicated downlink channel for at least one of Artificial Intelligence (AI) or machine learning (ML);
   a network capability indication;
   SCI;
   a PSCCH; or
   a PSSCH.

20. A method for transmitting data, performed by a second communication device, the method comprising:
receiving processed data, wherein the processed data is acquired by a first communication device processes a plurality of pieces of information to be processed.

21. The method according to claim 20, wherein the plurality of pieces of information to be processed comprises: data associated with model performance monitoring, training, and testing or usage within the first communication device.

22. The method according to claim 20, wherein one of the plurality of pieces of information to be processed comprises at least one of:

   a channel;
   a feature vector representing channel state information (CSI);
   input information of a model; or
   output information of a model.

23. The method according to claim 22, wherein the channel comprises at least one of:

   an initial channel formed by time-domain information, frequency-domain information, angle-domain information, and antenna-domain information;
   a channel acquired by extracting information in a time domain from the initial channel and selecting a subset of time-domain information;
   a channel acquired by extracting information in a frequency domain from the initial channel and selecting a subset of frequency-domain information;

a channel acquired by extracting information in an angle domain from the initial channel and selecting a subset of angle-domain information;

a channel acquired by extracting information in the antenna-domain from the initial channel and selecting a subset of antenna-domain information; or

a channel acquired by quantizing the initial channel.

24. The method according to claim 22, wherein the feature vector representing the CSI comprises a feature vector representing the CSI acquired by performing singular value decomposition (SVD) on the channel.

25. The method according to claim 22, wherein the input information of the model comprises at least one of the channel or the feature vector representing the CSI.

26. The method according to claim 22, wherein the output information of the model comprises at least one of the channel or the feature vector representing the CSI.

27. The method according to any one of claims 20 to 26, wherein processing the plurality of pieces of information to be processed comprises:

acquiring a mean value of the plurality of pieces of information to be processed; and

acquiring a mean value of the plurality of pieces of information to be processed upon element-wise processing.

28. The method according to claim 27, wherein the element-wise processing of the plurality of pieces of information to be processed comprises at least one of:

taking absolute values of elements in the plurality of pieces of information to be processed;

taking modulus values of elements in the plurality of pieces of information to be processed;

taking squares of absolute values of elements in the plurality of pieces of information to be processed;

taking squares of modulus values of elements in the plurality of pieces of information to be processed; or

multiplying elements in the plurality of pieces of information to be processed by conjugates of the elements.

29. The method according to claim 27 or 28, wherein acquiring the mean values comprises at least one of:

taking a mean value of the information based on a number of samples;

taking a mean value of internal elements in the information; or

taking a mean value of internal elements in the information and then taking a mean value of a number of samples.

30. The method according to claim 29, wherein taking the mean value of the internal elements of the information comprises:

taking a mean value of a total number of the internal elements of the information; and

taking a mean value of a number of elements in a dimension of the internal elements of the information.

31. The method according to any one of claims 20 to 30, wherein

the second communication device is a terminal device; and

the plurality of pieces of information to be processed comprises:

a plurality of pieces of first information to be processed in the terminal device, and the processed data comprises first data acquired by processing the plurality of pieces of first information in a first processing mode.

32. The method according to claim 31, wherein the first information comprises at least one of: tag data, assistance data or input data of the model in the terminal device.

33. The method according to claim 32, wherein the model in the terminal device is an encoder of a CSI generation model.

34. The method according to any one of claims 31 to 33, wherein the first data is transmitted over at least one of:

a radio resource control (RRC) message;

uplink control information (UCI);

an uplink message in a random access procedure;

a physical uplink control channel (PUCCH);

a physical uplink shared channel (PUSCH);

a dedicated uplink channel for at least one of Artificial Intelligence (AI) or machine learning (ML);

a terminal device capability report message;

sidelink control information (SCI);

a physical sidelink control channel (PSCCH); or

a physical sidelink shared channel (PSSCH).

35. The method according to any one of claims 20 to 30, wherein

the second communication device is a network device; and
the plurality of pieces of information to be processed comprises:
a plurality of pieces of second information to be processed in the network device, and the processed data comprises second data acquired by processing the plurality of pieces of second information in a second processing mode.

36. The method according to claim 35, wherein the second information comprises at least one of: evaluation data, assistance data, or output data of the model in the network device.

37. The method according to claim 36, wherein the model in the network device is a decoder of a CSI reconstruction model and/or a CSI prediction model.

38. The method according to any one of claims 35 to 37, wherein the second data is transmitted over at least one of:

a broadcast message;
an RRC message;
a media access control (MAC) control element (CE);
downlink control information (DCI);
a downlink message in a random access procedure;
a physical downlink control channel (PDCCH);
a physical downlink shared channel (PDSCH);
dedicated downlink channels for the AI and/or the ML;
a network capability indication;
SCI;
a PSCCH; or
a PSSCH.

39. A first communication device, comprising:
a transmitting unit, configured to transmit processed data, wherein the processed data is acquired by processing a plurality of pieces of information to be processed.

40. The first communication device according to claim 39, wherein the plurality of pieces of information to be processed comprises: data associated with model performance monitoring, training, and testing or usage within the first communication device.

41. The first communication device according to claim 39, wherein one of the plurality of pieces of information to be processed comprises at least one of:

a channel;
a feature vector representing channel state information (CSI);
input information of a model; or
output information of a model.

42. The first communication device according to claim 41, wherein the channel comprises at least one of:

an initial channel formed by time-domain information, frequency-domain information, angle-domain information, and antenna-domain information;
a channel acquired by extracting information in a time domain from the initial channel and selecting a subset of time-domain information;
a channel acquired by extracting information in a frequency domain from the initial channel and selecting a subset of frequency-domain information;
a channel acquired by extracting information in an angle domain from the initial channel and selecting a subset of angle-domain information;
a channel acquired by extracting information in the antenna-domain from the initial channel and selecting a subset of antenna-domain information; or
a channel acquired by quantizing the initial channel.

43. The first communication device according to claim 42, wherein the feature vector representing the CSI comprises a feature vector representing the CSI acquired by performing singular value decomposition (SVD) on the channel.

44. The first communication device according to claim 42, wherein the input information of the model comprises at least one of the channel or the feature vector representing the CSI.

45. The first communication device according to claim 42, wherein the output information of the model comprises at least one of the channel or the feature vector representing the CSI.

46. The first communication device according to any one of claims 39 to 45, processing the plurality of pieces of information to be processed comprises:

acquiring a mean value of the plurality of pieces of information to be processed; and
acquiring a mean value of the plurality of pieces of information to be processed upon element-wise processing.

**47.** The first communication device according to claim 46, wherein the element-wise processing of the plurality of pieces of information to be processed comprises at least one of:

taking absolute values of elements in the plurality of pieces of information to be processed;
taking modulus values of elements in the plurality of pieces of information to be processed;
taking squares of absolute values of elements in the plurality of pieces of information to be processed;
taking squares of modulus values of elements in the plurality of pieces of information to be processed; or
multiplying elements in the plurality of pieces of information to be processed by conjugates of the elements.

**48.** The first communication device according to claim 46 or 47, wherein acquiring the average values comprises at least one of:

taking a mean value of the information based on a number of samples;
taking a mean value of internal elements in the information; or
taking a mean value of internal elements in the information and then taking a mean value of a number of samples.

**49.** The first communication device according to claim 48, wherein taking the mean value of the internal elements of the information comprises:

taking a mean value of a total number of the internal elements of the information;
taking a mean value of a number of elements in a dimension of the internal elements of the information.

**50.** The first communication device according to any one of claims 39 to 49, wherein
the first communication device is a terminal device, and the plurality of pieces of information to be processed comprises a plurality of pieces of first information to be processed in the terminal device, and the processed data comprises first data acquired by processing the plurality of pieces of first information in a first processing mode.

**51.** The first communication device according to claim 50, wherein the first information comprises at least one of: tag data, assistance data, or input data of the model in the terminal device.

**52.** The first communication device according to claim 51, wherein the model in the terminal device is an encoder of a CSI generation model.

**53.** The first communication device according to any one of claims 50 to 52, wherein the first data is transmitted over at least one of:

a radio resource control (RRC) message;
uplink control information (UCI);
an uplink message in a random access procedure;
a physical uplink control channel (PUCCH);
a physical uplink shared channel (PUSCH);
a dedicated uplink channel for at least one of Artificial Intelligence (AI) or Machine Learning (ML);
a terminal device capability report message;
sidelink control information (SCI);
a physical sidelink control channel (PSCCH); or
a physical sidelink shared channel (PSSCH).

**54.** The first communication device according to any one of claims 39 to 49, wherein

the first communication device is a network device; and
the plurality of pieces of information to be processed comprises
a plurality of pieces of second information to be processed in the network device, and the processed data comprises second data acquired by processing the plurality of pieces of second information in a second processing mode.

**55.** The first communication device according to claim 54, wherein the second information comprises at least one of: evaluation data, assistance data, or output data of the model in the network device.

**56.** The first communication device according to claim 55, wherein the model in the network device is a decoder of a CSI reconstruction model and/or a CSI prediction model.

**57.** The first communication device according to any one of claims 54 to 56, wherein the second data is transmitted over at least one of:

a broadcast message;
an RRC message;
a media access control (MAC) control element (CE);
downlink control information (DCI);
a downlink message in a random access procedure;
a physical downlink control channel (PDCCH);
a physical downlink shared channel (PDSCH);
dedicated downlink channels for the AI and/or the ML;

a network capability indication;
SCI;
a PSCCH; or
a PSSCH.

58. A second communication device, comprising:
a receiving unit, configured to receive processed data, wherein the processed data is acquired by a first communication device processes a plurality of pieces of information to be processed.

59. The second communication device according to claim 58, wherein the plurality of pieces of information to be processed comprises: data associated with model performance monitoring, training, and testing or usage within the first communication device.

60. The second communication device according to claim 58, wherein one of the plurality of pieces of information to be processed comprises at least one of:

a channel;
a feature vector representing channel state information (CSI);
input information of a model; or
output information of a model.

61. The second communication device according to claim 60, wherein the channel comprises at least one of:

an initial channel formed by time-domain information, frequency-domain information, angle-domain information, and antenna-domain information;
a channel acquired by extracting information in a time domain from the initial channel and selecting a subset of time-domain information;
a channel acquired by extracting information in a frequency domain from the initial channel and selecting a subset of frequency-domain information;
a channel acquired by extracting information in an angle domain from the initial channel and selecting a subset of angle-domain information;
a channel acquired by extracting information in the antenna-domain from the initial channel and selecting a subset of antenna-domain information; or
a channel acquired by quantizing the initial channel.

62. The second communication device according to claim 60, wherein the feature vector representing the CSI comprises a feature vector representing the CSI acquired by performing singular value decomposition (SVD) on the channel.

63. The second communication device according to claim 60, wherein the input information of the model comprises at least one of the channel or the feature vector representing the CSI.

64. The second communication device according to claim 60, wherein the output information of the model comprises at least one of the channel or the feature vector representing the CSI.

65. The second communication device according to any one of claims 58 to 64, wherein processing the plurality of pieces of information to be processed comprises:

acquiring a mean value of the plurality of pieces of information to be processed; and
acquiring a mean value of the plurality of pieces of information to be processed upon element-wise processing.

66. The second communication device according to claim 65, wherein the element-wise processing of the plurality of pieces of information to be processed comprises at least one of:

taking absolute values of elements in the plurality of pieces of information to be processed;
taking modulus values of elements in the plurality of pieces of information to be processed;
taking squares of absolute values of elements in the plurality of pieces of information to be processed;
taking squares of modulus values of elements in the plurality of pieces of information to be processed; or
multiplying elements in the plurality of pieces of information to be processed by conjugates of the elements.

67. The second communication device according to claim 65 or 66, wherein acquiring the mean values comprises at least one of:

taking a mean value of the information based on a number of samples;
taking a mean value of internal elements in the information; or
taking a mean value of internal elements in the information and then taking a mean value of a number of samples.

68. The second communication device according to claim 67, wherein taking the mean value of the internal elements of the information comprises:

taking a mean value of a total number of the internal elements of the information; and

taking a mean value of a number of elements in a dimension of the internal elements of the information.

69. The second communication device according to any one of claims 58 to 68, wherein

the second communication device is a terminal device; and
the plurality of pieces of information to be processed comprises
a plurality of pieces of first information to be processed in the terminal device, and the processed data comprises first data acquired by processing the plurality of pieces of first information in a first processing mode.

70. The second communication device according to claim 69, wherein the first information comprises at least one of: tag data, assistance data, or input data of the model in the terminal device.

71. The second communication device according to claim 70, wherein the model in the terminal device is an encoder of a CSI generation model.

72. The second communication device according to any one of claims 69 to 71, wherein the first data is transmitted over at least one of:

a radio resource control (RRC) message;
uplink control information (UCI);
an uplink message in a random access procedure;
a physical uplink control channel (PUCCH);
a physical uplink shared channel (PUSCH);
a dedicated uplink channel for at least one of Artificial Intelligence (AI) or Machine Learning (ML);
a terminal device capability report message;
sidelink control information (SCI);
a physical sidelink control channel (PSCCH); or
a physical sidelink shared channel (PSSCH).

73. The second communication device according to any one of claims 58 to 69, wherein

the first communication device is a network device; and
the plurality of pieces of information to be processed comprises
a plurality of pieces of second information to be processed in the network device, and the processed data comprises second data acquired by processing the plurality of pieces of second information in a second processing mode.

74. The second communication device according to claim 73, wherein the second information comprises at least one of: evaluation data, assistance data, or output data of the model in the network device.

75. The second communication device according to claim 74, wherein the model in the network device is a decoder of a CSI reconstruction model and/or a CSI prediction model.

76. The second communication device according to any one of claims 73 to 75, wherein the second data is transmitted over at least one of:

a broadcast message;
an RRC message;
a media access control (MAC) control element (CE);
downlink control information (DCI);
a downlink message in a random access procedure;
a physical downlink control channel (PDCCH);
a physical downlink shared channel (PDSCH);
dedicated downlink channels for the AI and/or the ML;
a network capability indication;
SCI;
a PSCCH; or
a PSSCH.

77. A communication device, comprising: a processor and a memory storing one or more computer programs; wherein the processor is configured to load and execute the one or more computer programs stored in the memory, cause the communication device to perform the method as defined in any one of claims 1 to 19 or 20 to 38.

78. A chip, comprising: a processor for invoking and executing one or more computer programs from a memory, causes a terminal equipped with the chip to perform the method as defined in any of claims 1 to 19 or 20 to 38.

79. A computer-readable storage medium, storing one or more computer programs, wherein the one or more computer programs, when loaded and executed by a terminal, cause the terminal to perform the method as defined in any of claims 1 to 19 or 20 to 38.

80. A computer program product, comprising: one or more computer instructions that cause a computer to perform the method as defined in any of claims 1 to 19 or 20 to 38.

81. A computer program that causes a computer to perform the method as defined in any of claims 1 to 19 or 20 to 38.

**Drawings**

100

110

120    120

FIG. 1

| CSI | | CSI |
| AI encoder | | AI decoder |
| Compressed CSI | | Compressed CSI |

FIG. 2A

Measured CSI          Predicted CSI

$W_{t-10}$      $W_{t-5}$      $W_t$          $W_{t+4}$

$W_{t+1}$

...

CSI prediction model

FIG. 2B

S310

300

A first communication device transmits processed data, wherein the processed data is acquired by processing a plurality of pieces of information to be processed.

FIG. 3

S410

400

A second communication device receives processed data wherein the processed data is acquired by processing, by a first communication device, a plurality of pieces of information to be processed.

FIG. 4

Base station

First data

UE

FIG. 5A

Base station

The UE indicates provided
type and/or configuration of
tag data

UE

FIG. 5B

Base station

The network indicates
required type and/or
configuration of the tag data

UE

FIG. 5C

Base station

The UE reports
supported type and/
or configuration of
the tag data

The network indicates
the required type and/
or configuration of the
tag data

UE

FIG. 5D

Base station

The network indicates
the supported type
and/or configuration of
the tag data

The UE indicates the
provided type and/or
configuration of the
tag data

UE

FIG. 5E

Base station

Second data

UE

FIG. 6A

Base station

The UE indicates
required type and/or
configuration of the
evaluation data

UE

FIG. 6B

Base station

The network
indicates provided
type and/or
configuration of the
evaluation data

UE

FIG. 6C

Base station

The UE reports
supported type and/or
configuration of the
evaluation data

The network indicates the
provided type and/or
configuration of the
evaluation data

UE

FIG. 6D

The network indicates
supported type and/or
configuration of the
evaluation data

The UE indicates
the required type
and/or configuration
of the evaluation
data

FIG. 6E

First communication device 700

Transmitting unit 701

FIG. 7

Second communication device 800

Receiving unit 801

FIG. 8

Communication device 900

Memory
920

Processor
910

Transceiver
930

FIG. 9

EP 4 753 320 A1

Chip 1000

Input
interface
1030

Processor
1010

Memory
1020

Output
interface
1040

FIG. 10

Communication system 1100

First
communication
device

1110

Second
communication
device

1120

FIG. 11

## INTERNATIONAL SEARCH REPORT

| International application No. |
| --- |
| **PCT/CN2023/108970** |

### A.  CLASSIFICATION OF SUBJECT MATTER

H04W24/06(2009.01)i

According to International Patent Classification (IPC) or to both national classification and IPC

### B.  FIELDS SEARCHED

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 模型, 处理, 训练, 信道, 状态, 信息, 元素, model, process, train, channel, CSI, state, information, element

### C.  DOCUMENTS CONSIDERED TO BE RELEVANT

| Category* | Citation of document, with indication, where appropriate, of the relevant passages | Relevant to claim No. |
| --- | --- | --- |
| X | CN 116155330 A (HUAWEI TECHNOLOGIES CO., LTD.) 23 May 2023 (2023-05-23) description, paragraphs [118]-[140], [165]-[324], and [328]-[369] | 1-81 |
| X | CN 116436500 A (SPREADTRUM COMMUNICATIONS (SHANGHAI) CO., LTD.) 14 July 2023 (2023-07-14) description, paragraphs [085]-[254] | 1-81 |
| X | CN 114157722 A (HUAWEI TECHNOLOGIES CO., LTD.) 08 March 2022 (2022-03-08) description, paragraphs [103]-[202] | 1-81 |
| A | CN 115443616 A (ALCATEL-LUCENT SHANGHAI BELL CO., LTD. et al.) 06 December 2022 (2022-12-06) entire document | 1-81 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 January 2024** | **23 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/108970** |

| Patent document cited in search report | | | Publication date (day/month/year) | Patent family member(s) | | | Publication date (day/month/year) |
| --- | --- | --- | --- | --- | --- | --- | --- |
| CN | 116155330 | A | 23 May 2023 | None | | | |
| CN | 116436500 | A | 14 July 2023 | None | | | |
| CN | 114157722 | A | 08 March 2022 | WO | 2022037390 | A1 | 24 February 2022 |
| CN | 115443616 | A | 06 December 2022 | WO | 2021212327 | A1 | 28 November 2021 |

Form PCT/ISA/210 (patent family annex) (July 2022)